# EUROPÄISCHE PATENTSCHRIFT

(11) **EP 1 128 385 B1**
(45) Veröffentlichungstag und Bekanntmachung des Hinweises auf die Patenterteilung: **22.08.2007**
(21) Anmeldenummer: 01102443.7
(22) Anmeldetag: 03.02.2001
(51) Int. Cl.: G11B 27/10, G11B 27/11, H04H 1/00, G11B 19/02, G11B 31/00, H04B 7/26, B60R 11/02, H04Q 7/22, G11B 7/16

(54) **Verfahren zum Betreiben eines Wiedergabegerätes zur Wiedergabe von auf einem Datenträger gespeicherten Daten in einem Fahrzeug**
Method of operating a playback apparatus for reproducing data stored on a record carrier in a vehicle
Procédé de fonctionnement d'un appareil de reproduction pour reproduire des données enregistrées sur un milieu d'enregistrement dans une voiture

(30) Priorität: 23.02.2000 DE 10008440
(43) Veröffentlichungstag der Anmeldung: 29.08.2001
(73) Patentinhaber: Harman Becker Automotive Systems GmbH, 76307 Karlsbad (DE)
(72) Erfinder: Hovestadt, Guido, 76228 Karlsruhe (DE); Lappe, Dirk, 76228 Karlsruhe (DE); Wolf, Stefan, Dr., 64367 Mühltal (DE)
(74) Vertreter: Patentanwälte Westphal, Mussgnug & Partner

(56) Entgegenhaltungen:
- EP-A- 0 777 106
- EP-A- 0 851 696
- EP-A- 1 107 254
- WO-A-98/25269
- DE-A- 19 917 169
- US-A- 4 870 515
- US-A- 4 872 151
- US-A- 5 751 672

## Beschreibung

Die Erfindung betrifft ein Verfahren zum Betreiben eines mit einem Autotelefon kombinierten Wiedergabegerätes zur Wiedergabe von auf einem Datenträger gespeicherten Daten in einem Fahrzeug.

Kraftfahrzeuge sind zum Beispiel mit einem Autoradio, einem Multimedia-Spieler, einem Autokassettenspieler und einem Autotelefon ausgerüstet. Eine Kombination aus Autotelefon und Autoradio wird als Telematikgerät bezeichnet.

Auf einem Multimedia-Datenträger sind neben den eigentlichen Multimedia-Daten das Inhaltsverzeichnis und weitere Zusatzdaten gespeichert. Für das Beispiel einer Audio- oder Video-CD sind der Titel der CD, die auf ihr gespeicherten Musiktitel bzw. deren Anfangs- oder Endzeiten bzw. die Größe der gespeicherten Dateien gespeichert, die beim Einlegen des Datenträgers in einen Multimedia-Spieler gelesen werden können und auf einer optischen Anzeigevorrichtung, meist ein Flüssigkeitskristall-Bildschirm, anzeigbar sind.

Hierzu muß der Benutzer jedoch Befehle in das Wiedergabegerät eingeben, was während der Fahrt die Aufmerksamkeit des Fahrers von der Straße ab und auf das Wiedergabegerät lenkt. Aus Sicherheitsgründen sollte daher eine Aufmerksamkeit erfordernde Bedienung des Wiedergabegerätes während der Fahrt durch den Fahrer unterbleiben. Andererseits aber ist es wünschenswert, dass der Fahrer auch während der Fahrt gefahrlos das Wiedergabegerät bedienen kann.

Die US 5,751,672 beschreibt ein Verfahren und eine Vorrichtung zum Aktualisieren von in einem CD-Wechsler gespeicherten Zusatzinformationen zu den in den CD-Wechsler eingelegten CDs. Die EP 1 107 254 A2 beschreibt eine Audiowiedergabevor richtung, bei der über eine Sende- und Empfangseinheit Informationen mit einem stationären PC ausgetauscht werden. Die EP 0 777 106 A1 beschreibt eine Einrichtung zur Kommunikation und Information in einem Kraftfahrzeug, mit mindestens einem Wiedergabegerät für Musik, einem Routenführungssystem und beispielsweise einem Telefon.

Es ist daher Aufgabe der Erfindung, Zusatzinformationen für ein Wiedergabegerät zur Wiedergabe von auf einem Datenträger aufgezeichneten Daten in einem Fahrzeug verfügbar zu machen, ohne die Aufmerksamkeit des Fahrers von der Straße ab und auf das Wiedergabegerät hin zu lenken.

Eine erste Lösung dieser Aufgabe sieht vor, dass nach Einlegen eines Datenträgers in das Wiedergabegerät vom Autotelefon eine Funkverbindung zu einem Datenserver aufgebaut wird, dass mindestens ein Teil der auf dem eingelegten Datenträger gespeicherten Kenndaten vom Wiedergabegerät gelesen und vom Autotelefon zum Datenserver übermittelt werden, der diese Kenndaten mit gespeicherten Daten vergleicht, um den Datenträger im Wiedergabegerät des Fahrzeugs zu identifizieren, dass der Datenserver nach Identifizierung des Datenträgers Zusatzinformationen zum Wiedergabegerät überträgt, die mehr Informationen beinhalten können als die auf dem Datenträger gespeicherten Kenndaten, wo sie in einem Speicher gespeichert werden und jederzeit abrufbar und anzeigbar sind.

Eine zweite im Anspruch 1 beschriebene Lösung dieser Aufgabe sieht vor, dass von einem Personalcomputer mittels eines Telefons oder einem Modem eine Funkverbindung zum Autotelefon aufgebaut wird, dass Kenndaten vorgebbarer Datenträger zum Autotelefon übertragen werden, in einem Speicher des Wiedergabegeräts gespeichert werden und jederzeit aus dem Speicher abrufbar und anzeigbar sind.

Die erste Lösung sieht vor, dass nach Einlegen eines Datenträgers, zum Beispiel einer CD, einer DVD oder einer Speicherkarte, das Wiedergabegerät, z.B. ein CD-Spieler oder ein Multimediaspieler, die Kenndaten der CD liest. Anschließend werden diese Kenndaten automatisch vom Autotelefon zu einem Datenserver gesendet, der sie mit gespeicherten Kenndaten vergleicht, um die im Fahrzeug in den CD-Spieler gelegte CD zu identifizieren. Nach Identifikation der CD sendet der Datenserver alle bei ihm gespeicherten Kenndaten über diese CD zum Fahrzeug, wo sie vom Autotelefon empfangen und an den CD-Spieler weitergeleitet werden. Im CD-Spieler werden die empfangenen Kenndaten in einem Speicher gespeichert. Wird dieselbe CD ein zweites Mal in den CD-Spieler gelegt, so sind deren Kenndaten bereits vorhanden und können angezeigt werden. Eine Funkverbindung zum Datenserver ist dann nicht mehr erforderlich, kann aber trotzdem zur Aktualisierung der Zusatzinformationen hergestellt werden. Besonders vorteilhaft ist es, diese Kenndaten nach Einlegen der CD in den CD-Spieler automatisch anzuzeigen. Der Fahrer wird dadurch weitgehend von der Bedienung seines CD-Spielers entlastet.

Ein Vorteil ist darin zu sehen, dass die vom Datenserver zum Fahrzeug gesendeten Kenndaten wesentlich mehr Zusatzinformationen über die eingelegte CD enthalten können, als auf der CD gespeichert sind.

Je nach Kapazität des Speichers können die Kenndaten einer mehr oder weniger großen Anzahl von Kompaktplatten gespeichert werden.

Die zweite Lösung der Aufgabe sieht vor, dass von einem Personalcomputer mittels eines Telefons oder eines Modems eine Funkverbindung zum Autotelefon aufgebaut wird. Der Bediener kann im Personalcomputer gespeicherte Kenndaten ausgesuchter Datenträger zum Fahrzeug übertragen. Die vom Autotelefon empfangenen Kenndaten werden zum Wiedergabegerät weitergeleitet, wo sie in einem Speicher gespeichert werden, damit sie jederzeit aus dem Speicher abrufbar und anzeigbar sind.

Das erfindungsgemäße Verfahren hat den Vorteil, dass der Fahrer bequem von zu Hause aus mit seinem Personalcomputer z.B. die Kenndaten beliebiger CDs in den Speicher des CD-Spielers seines Autos laden kann. Er braucht sich hierzu nicht in seinem Fahrzeug aufzuhalten. Selbstverständlich kann er den Speicherinhalt des CD-Spielers in seinem Auto von zu Hause aus mittels seines Personalcomputers jederzeit nach seinen Wünschen aktualisieren.

Auch das zweite erfindungsgemäße Verfahren hat wie das erste den Vorteil, dass die vom Personalcomputer zum Fahrzeug gesendeten Kenndaten wesentlich mehr Zusatzinformationen über die eingelegte CD enthalten können, als auf der CD gespeichert sind.

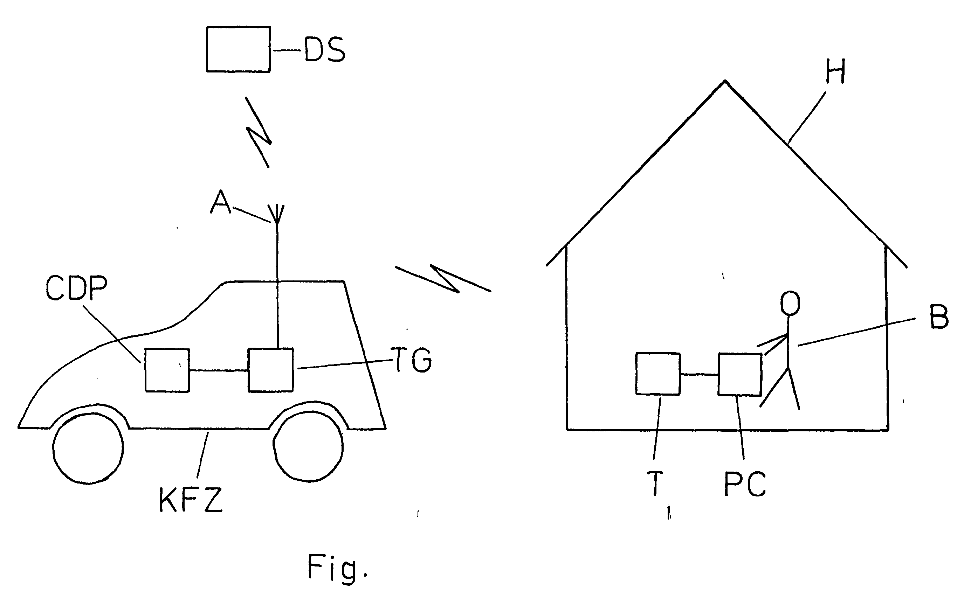

Die Erfindung wird anhand der Figur nun näher beschrieben und erläutert.

In der Figur ist ein Fahrzeug KFZ mit einem Autotelefon TG und einem mit dem Autotelefon TG verbundenen CD-Spieler CDP gezeigt. An das Autotelefon TG ist eine Antenne A angeschlossen. Außerdem ist ein Datenserver DS dargestellt. Im Hause H des Fahrers befinden sich ein Personalcomputer PC und ein Telefon T-oder ein Modem.

Nach dem Einlegen einer CD in den CD-Spieler CDP im Fahrzeug KFZ sendet das Autotelefon TG die Kenndaten der eingelegten CD über die Antenne A zu einem Datenserver DS. Der Datenserver DS vergleicht die empfangenen Kenndaten mit gespeicherten Kenndaten, um die CD im Fahrzeug KFZ zu identifizieren. Nach deren Identifikation sendet der Datenserver DS Kenndaten der eingelegten CD zum Fahrzeug KFZ, wo sie in einem Speicher des CD-Spielers CDP gespeichert werden und automatisch an einer optischen Anzeigevorrichtung angezeigt werden.

Gemäß dem erfindungsgemäßen Verfahren kann der Bediener B bequem von seinem Haus H aus mittels seines Personalcomputers PC und seines Telefons T die Kenndaten ausgesuchter CDs zu seinem Fahrzeug KFZ übertragen, wo diese Kenndaten im Speicher des CD-Spielers CDP gespeichert werden.

Ein weiterer Vorteil liegt darin, dass der Bediener jederzeit von zu Hause aus den Speicher im CD-Spieler seines Fahrzeuges nach seinen Wünschen aktualisieren kann. Besonders vorteilhaft ist es, die Kenndaten in komprimierter Form zu speichern.

Wie bereits erwähnt, haben beide Verfahren den gemeinsamen Vorteil, dass die zum Fahrzeug gesendeten Kenndaten wesentlich mehr Zusatzinformationen über den eingelegten Datenträger enthalten können, als auf ihm gespeichert sind. Es kann sich bei den Zusatzinformationen zum Beispiel um sogenannte ID3-Tags handeln.

Das erfindungsgemäße Verfahren ist nicht auf eine Audio-CD beschränkt. Vielmehr ist es für alle durch Kenndaten identifizierbaren Datenträger wie z.B. DVD, Speicherkarten wie z.B. Memory Stick und sonstige bespielt kaufbare Datenträger geeignet. Als Wiedergabegerät kommen z.B. CD-Spieler, DVD-Spieler oder Multimediaspieler in Frage.

### Bezugszeichenliste

- A: Antenne
- B: Bediener
- CDP: CD-Spieler
- DS: Datenserver
- H: Haus
- KFZ: Fahrzeug
- PC: Personalcomputer
- T: Telefon, Modem
- TG: Autotelefon

## Patentansprüche

1. Verfahren zum Betrieb eines mit einem Autotelefon (TG) kombinierten Wiedergabegerätes (CDP) zur Wiedergabe von auf einem Datenträger gespeicherten Daten in einem Fahrzeug, wobei von einem Personalcomputer (PC) mittels eines Telefons (T) oder eines Modems eine Funkverbindung zum Autotelefon (TG) aufgebaut wird, und Kenndaten vorgebbarer Datenträger zum Autotelefon (TG) übertragen werden, in einem Speicher des Wiedergabegerätes (CDP) gespeichert werden und jederzeit aus dem Speicher abrufbar und anzeigbar sind,
wobei die Kenndaten in komprimierter Form gespeichert werden.

2. Verfahren nach Anspruch 1,
**dadurch gekennzeichnet, dass** die Kenndaten vom Personalcomputer (PC) gemäss dem Short-Message-Services-Standard (SMS) zum Autotelefon (TG) übertragen werden.

3. Verfahren nach einem der Ansprüche 1 bis 2,
**dadurch gekennzeichnet, dass** es sich bei dem Wiedergabegerät (CDP) um einen CD-Spieler, einen DVD-Spieler oder einen Multimediaspieler und beim Datenträger um eine CD oder eine DVD handelt.

4. Verfahren nach einem der Ansprüche 1 bis 2,
**dadurch gekennzeichnet, dass** es sich bei dem Datenträger um eine Speicherkarte handelt.

## Claims

1. A method of operating a reproduction device (CDP) combined with a car telephone (TG) for reproducing data stored on a data carrier in a vehicle, wherein a radio connection with the car telephone (TG) is produced by means of a telephone (T) or a modem and characteristic data from a predeterminable data carrier is transferred to the car telephone (TG), stored in a memory of the reproduction device (CDP) and may be retrieved at any time from the memory and displayed, wherein the characteristic data is stored in compressed form.

2. A method as claimed in Claim 1, **characterised in that** the characteristic data are transferred from the personal computer (PC) to the car telephone (TG) in accordance with the Short-Message-Services Standard (SMS).

3. A method as claimed in one of Claims 1 to 2, **characterised in that** the reproduction device (CDP) is a CD player, a DVD player or a multimedia player and the data carrier is a CD or a DVD.

4. A method as claimed in one of Claims 1 to 2, **characterised in that** the data carrier is a memory card.

## Revendications

1. Procédé pour le fonctionnement d'un appareil de reproduction (CDP) combiné avec un téléphone de voiture (TG) pour la reproduction dans un véhicule automobile de données enregistrées sur un support de données, dans lequel une liaison radio est établie avec le téléphone de voiture (TG) par un ordinateur personnel (PC) à l'aide d'un téléphone (T) ou d'un modem, et des données caractéristiques de supports de données prédéfinis sont transmises au téléphone de voiture (TG), mémorisées dans une mémoire de l'appareil de reproduction (CDP) et interrogeables et affichables à n'importe quel moment à partir de la mémoire, les données caractéristiques étant mémorisées sous forme compressée.

2. Procédé selon la revendication 1, **caractérisé en ce que** les données sont transmises par l'ordinateur personnel (PC) au téléphone de voiture (TG) suivant la norme Short-Message-Services (SMS).

3. Procédé selon l'une quelconque des revendications 1 à 2, **caractérisé en ce que** l'appareil de reproduction (CDP) est un lecteur de CD, un lecteur de DVD ou un lecteur multimédia et le support de données est un CD ou un DVD.

4. Procédé selon l'une quelconque des revendications 1 à 2, **caractérisé en ce que** le support de données est une carte mémoire.
